# EUROPÄISCHE PATENTSCHRIFT

(11) **EP 1 064 168 B1**
(45) Veröffentlichungstag und Bekanntmachung des Hinweises auf die Patenterteilung: **08.09.2004**
(21) Anmeldenummer: 99964355.4
(22) Anmeldetag: 22.11.1999
(51) Int. Cl.: B60K 20/00, F16H 59/02

(54) **SCHALTVORRICHTUNG EINES KRAFTFAHRZEUGGETRIEBES**
SELECTOR DEVICE FOR THE GEARBOX OF A MOTOR VEHICLE
DISPOSITIF SELECTEUR POUR BOITE DE VITESSE DE VEHICULE

(30) Priorität: 23.11.1998 DE 19853934
(43) Veröffentlichungstag der Anmeldung: 03.01.2001
(60) Teilanmeldung: 03019794.1
(73) Patentinhaber: ZF Lemförder Metallwaren AG, 49441 Lemförde (DE)
(72) Erfinder: GIEFER, Andreas, D-49448 Lemförde (DE)
(86) Internationale Anmeldenummer: PCT/DE1999/003705
(87) Internationale Veröffentlichungsnummer: WO 2000/030885

(56) Entgegenhaltungen:
- EP-A- 0 881 413
- DE-A- 19 620 532

## Beschreibung

Die Erfindung betrifft eine Schaltvorrichtung eines Kraftfahrzeuggetriebes mit einem Wählhebel und einer Kinematik zur Übertragung der Wählbewegungen auf das Automatikgetriebe, wobei der Wählhebel in einer Automatikschaltgasse zur Anwahl von Automatikgetriebestufen und in einer Sequenzschaltgasse zum manuellen Auf- und Abwärtsschalten von Getriebestufen bewegt werden kann und die Schaltvorrichtung insgesamt drei Bewegungsräume aufweist.

Eine derartige Schaltvorrichtung eines Kraftfahrzeuggetriebes ist aus der DE 43 24 333 A1 bekannt. Die darin beschriebene Schaltvorrichtung weist einen Wählhebel und eine Kinematik zur Übertragung der Wählbewegungen auf das Kraftfahrzeuggetriebe auf, wobei der Wählhebel in einer Automatikschaltgasse zur Anwahl von Automatikgetriebestufen und in zwei Sequenzschaltgassen zum manuellen Auf- und Abwärtsschalten von Getriebestufen bewegt werden kann. Somit enthält die bekannte Ausführung drei nebeneinander liegende, vorzugsweise im wesentlichen parallel zueinander ausgerichtete Bewegungsräume.

Aus der Deutschen Offenlegungsschrift DE 195 26 059 A1 die als nächstliegendes bekanntes Stand der Technik betrachtet wird, ist ferner eine Schaltvorrichtung eines automatischen Kraftfahrzeuggetriebes bekannt, die einen Wählhebel und eine Kinematik zur Übertragung der Wählbewegungen auf das Automatikgetriebe aufweist, wobei sich der Wählhebel zur Anwahl von Automatikgetriebestufen in einer Automatikschaltgasse und zum manuellen Auf- und Abwärtsschalten von Getriebestufen in einer Sequenzschaltgasse bewegen kann. Die Schaltvorrichtung ist dabei derart ausgeführt, daß in Fahrtrichtung gesehen rechts die Automatikschaltgasse angelegt ist und sich links davon die Sequenzschaltgasse befindet. Die gezeigte Ausführung der Schaltvorrichtung ist hierbei für ein linksgelenktes Fahrzeug ausgelegt. Soll eine entsprechende Schaltvorrichtung in ein rechtsgelenktes Fahrzeug eingebaut werden, so müssen aus ergonomischen Gründen die Automatikschaltgasse und die Sequenzschaltgasse bezüglich ihrer Anordnung gegeneinander vertauscht werden. Das heißt, bei einem rechtsgelenkten Fahrzeug befindet sich die Automatikschaltgasse in Fahrtrichtung gesehen auf der linken Seite und die Sequenzschaltgasse rechts davon. Um diese Umkehrung zu bewirken ist es notwendig, die Schaltvorrichtung in einer spiegelbildlichen Version herzustellen. Derartige Maßnahmen bedeuten immer einen hohen Aufwand, da neue Zeichnungssätze erstellt werden müssen, und neue Werkzeuge hergestellt werden müssen, beziehungsweise NC-Programmierungen umzuschreiben sind. Außerdem ist es bezüglich der Ersatzteilhaltung notwendig, beide Arten der Schaltvorrichtung auf Lager zu halten. Alle obengenannten Maßnahmen führen zu einem erheblichen Kostenaufwand.

Es ist Aufgabe der Erfindung eine Schaltvorrichtung für eine Automatikgetriebe mit Sequenzschaltungsmöglichkeit bereitzustellen, welche im wesentlichen für rechtsgelenkte und linksgelenkte Fahrzeuge identisch ist.

Die Aufgabe der Erfindung wird durch die Merkmale des Anspruches 1 gelöst.

Demgemäß wird vorgeschlagen eine Schaltvorrichtung eines automatischen Kraftfahrzeuggetriebes mit einem Wählhebel und einer Kinematik zur Übertragung der Wählbewegungen auf das Automatikgetriebe weiterzuentwickeln, wobei der Wählhebel in bekannter Weise in einer Automatikschaltgasse zur Anwahl von Automatikgetriebestufen und in einer Sequenzschaltgasse zum manuellen Auf- und Abwärtsschalten von Getriebestufen bewegt werden kann. Die erfindungsgemäße Weiterentwicklung sieht vor, daß die Schaltvorrichtung drei nebeneinander liegende Bewegungsräume für den Wählhebel aufweist, wobei jeweils zwei benachbarte Bewegungsräume für jeweils unterschiedliche Schaltfunktionen (wie zum Beispiel Schalten zwischen Automatikfahrstufen und sequentielles Schalten) vorgesehen sind. Dabei wird die Schaltvorrichtung erfindungsgemäß zusätzlich mit einer Bewegungskulisse für den Wählhebel versehen, welche eine Automatikschaltgasse und mindestens eine Sequenzschaltgasse aufweist. Wahlweise kann hierbei durch Austauschen der Bewegungskulisse die ansonsten gleiche Schaltvorrichtung sowohl für Linkslenker-Fahrzeuge als auch für Rechtslenker-Fahrzeuge eingesetzt werden. Vorzugsweise sollte dabei die Bewegungskulisse der Schaltvorrichtung so ausgestaltet sein, dass sie nur eine einzige Automatikschaltgasse und eine einzige Sequenzschaltgasse aufweist.

Mit einer derart ausgestalteten Schaltvorrichtung ist es nun möglich, sowohl bei Rechtsals auch bei Linkslenkern die gleiche Schaltvorrichtung einzusetzen, wobei bei beiden Fahrzeugtypen der mittlere Bewegungsraum für die Automatikschaltgasse genutzt werden kann, während für ein Linkslenker-Fahrzeug der linke Bewegungsraum für die Sequenzschaltgasse und bei einem Rechtslenker-Fahrzeug der rechte Bewegungsraum für die Sequenzschaltgasse verwendet werden kann.

Zwischen der Automatikschaltgasse und der Sequenzschaltgasse kann gemäß einer Ausgestaltung der Erfindung eine Verbindungsgasse (Wählgasse) vorgesehen sein. Über diese Wählgasse kann der Wählhebel von einer bestimmten Automatikstellung aus (meist der "D"-Stellung) zur Sequenzschaltgasse übergeschwenkt, beziehungsweise wieder von der Sequenzschaltgasse zur Automatikschaltgasse zurückbewegt werden.

Entsprechend einer weiteren vorteilhaften Ausgestaltung der Schaltvorrichtung wird vorgeschlagen, für den Wählhebel in der Automatikschaltgasse eine erste Schaltachse und in der Sequenzschaltgasse eine zweite Schaltachse vorzusehen, wobei der Wählhebel - je nach gewählter Schaltgasse, beziehungsweise dem mit der Schaltgasse korrespondierenden Bewegungsraum - nur um eine der Schaltachsen beweglich ist.

Vorzugsweise können hierbei die erste und die zweite Schaltachse exzentrisch zueinander angeordnet sein, wobei wiederum vorzugsweise die Abstände der ersten und der zweiten Schaltachse zu einem Schaltknauf am Ende des Wählhebels sich wesentlich unterscheiden können. Hierdurch wird bewirkt, daß sich der Schaltknauf je nach Schaltgasse, beziehungsweise je nach Bewegungsraum auf unterschiedlich großen Radien bewegt.

Entsprechend dem Erfindungsgedanken schlägt der Erfinder auch vor, eine Schaltvorrichtung, die die obengenannten Merkmale aufweist, dahingehend weiterzuentwickeln, daß die Schaltvorrichtung:
- einen, um eine Wählachse schwenkbaren Zentralträger aufweist,
- eine am Zentralträger schwenkbar gelagerte innere Brücke aufweist, die um eine im wesentlichen senkrecht zur Wählachse stehende erste Schaltachse schwenkbar ist, und
- eine an der inneren Brücke, um eine zweite Schaltachse gelagerte und schwenkbare, äußere Brücke aufweist, die mit dem Wählhebel verbunden ist.

Weiterhin wird gemäß einer bevorzugten Ausführung vorgeschlagen, die Schaltvorrichtung mit mindestens einem Sperrelementeingriff und mindestens einem Sperrelement zu versehen, wobei diese mit der inneren und äußeren Brücke derart zusammenwirken, daß bei bestimmten Schwenkstellungen des Zentralträgers - und damit auch der inneren und äußeren Brücke - mindestens ein Sperrelement und mindestens ein Sperrelementeingriff sich im gegenseitigen Eingriff befinden, während in einer anderen Schwenkstellung des Zentralträgers kein Sperrelement und kein Sperrelementeingriff sich im Eingriff befinden - also die äußere Brücke sich gegenüber der inneren Brücke um die zweite Schaltachse verschwenken kann. Bevorzugt wird bei dieser Ausführung, daß die erste Schaltachse durch das mindestens eine Sperrelement verläuft. Durch diese Ausgestaltung wird es ermöglicht, daß das Sperrelement und der Sperrelementeingriff eine Art zusätzliche Drehachse bilden, die konzentrisch mit der ersten Schaltachse verläuft.

Vorzugsweise wird das mindestens eine Sperrelement und der mindestens eine Sperrelementeingriff derart angeordnet, daß sie im Falle des gegenseitigen Eingriffs eine drehfeste Verbindung zwischen der inneren Brücke und der äußeren Brücke bewirken. Bevorzugt kann hier der mindestens eine Sperrelementeingriff mit dem Gehäuse verbunden sein.

Entsprechend einer weiteren, vorteilhaften Ausführung der Schaltvorrichtung können Mittel zur Begrenzung von Bewegungsgassen und/oder Bewegungsräumen vorgesehen werden. Diese Mittel können teilweise am Gehäuse und/oder teilweise an der inneren Brücke und/oder teilweise an der äußeren Brücke befestigt sein. Durch diese Begrenzungsmittel können die möglichen Wege des Wählhebels entweder großzügig-das heißt mit entsprechendem Spiel - angeordnet werden, wodurch Bewegungsräume entstehen, oder die Begrenzungsmittel werden so gestaltet, daß für den Wählhebel im wesentlichen nur Bewegungsraum in eine Richtung zur Verfügung steht, so entstehen entsprechende Bewegungsgassen, die dann die Schaltgassen darstellen können.

Weitere bevorzugte Ausführungsformen der Schaltvorrichtung sehen vor, daß zur Übertragung der Schaltbewegung des Wählhebels zum Kraftfahrzeuggetriebe in mindestens einer Gasse ein Seilzug oder ein Gestänge vorgesehen ist. Additiv oder alternativ kann auch die Übertragung der Schaltbewegung des Wählhebels zum Kraftfahrzeuggetriebe in mindestens einer Schaltgasse über eine elektronische Übertragungsvorrichtung vorgenommen werden, wobei diese Art der Übertragung vorzugsweise in der Sequenzschaltgasse verwendet wird.

Außerdem ist es vorteilhaft, die Schaltvorrichtung mit einem an sich bekannten "Key Lock"-System und/oder einem "Shift Lock"-System auszustatten.

Es versteht sich, daß die vorstehend genannten und nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus den Unteransprüchen und der nachfolgenden Beschreibung eines bevorzugten Ausführungsbeispieles unter Bezugnahme auf die Zeichnungen.

Die Figuren zeigen im Einzelnen:
- Figur 1:: Erfindungsgemäße Schaltvorrichtung in seitlicher 3D-Ansicht von rechts mit Wählhebel in Mittelstellung in der Automatikschaltgasse;
- Figur 2:: Erfindungsgemäße Schaltvorrichtung in seitlicher 3D-Ansicht von rechts mit Wählhebel in "P"-Stellung in der Automatikschaltgasse;
- Figur 3:: Erfindungsgemäße Schaltvorrichtung in seitlicher 3D-Ansicht von links mit Wählhebel in "P"-Stellung in der Automatikschaltgasse;
- Figur 4:: Erfindungsgemäße Schaltvorrichtung in seitlicher 3D-Ansicht von rechts mit Wählhebel in Mittelstellung in der rechten Sequenzschaltgasse;
- Figur 5:: Erfindungsgemäße Schaltvorrichtung in seitlicher 3D-Ansicht von rechts mit zurückgezogenem Wählhebel in der rechten Sequenzschaltgasse;
- Figur 6:: Seitliche 3D-Ansicht der inneren und äußeren Brücke mit Teilen des Gehäuses von rechts mit Wählhebel in Mittelstellung in der Automatikschaltgasse;
- Figur 7:: Seitliche 3D-Ansicht der inneren und äußeren Brücke mit Teilen des Gehäuses von rechts mit Wählhebel in Mittelstellung in der Sequenzschaltgasse;
- Figur 8:: Seitliche 3D-Ansicht der inneren und äußeren Brücke mit Teilen des Gehäuses von rechts mit zurückgezogenem Wählhebel in der S equenzschaltgasse;
- Figur 9:: 3D-Ansicht der inneren und äußeren Brücke mit Teilen des Gehäuses von hinten mit Wählhebel in der Sequenzschaltgasse;
- Figur 10:: Seitliche 3D-Ansicht der inneren Brücke;
- Figur 11:: Seitliche 3D-Ansicht der äußeren Brücke;
- Figur 12:: Seitliche 3D-Ansicht des Zentralträgers;
- Figur 13-14: Schematische Darstellungen der Bewegungsräume I, II und III;
- Figur 15:: Schematische Ansicht der Bewegungsräume und Bewegungsgassen im Schnitt A-A der Figuren 16 und 17;
- Figur 16:: Schematische Ansicht der Bewegungsräume und Bewegungsgassen im Schnitt von hinten;
- Figur 17:: Schematische Ansicht der Bewegungsräume und Bewegungsgassen im Schnitt von der Seite;
- Figur 18:: 3D-Ansicht der Schaltvorrichtung mit Wählhebel in zwei unterschiedlichen Positionen in der Automatikschaltgasse und einer Mittelposition in der Sequenzschaltgasse.

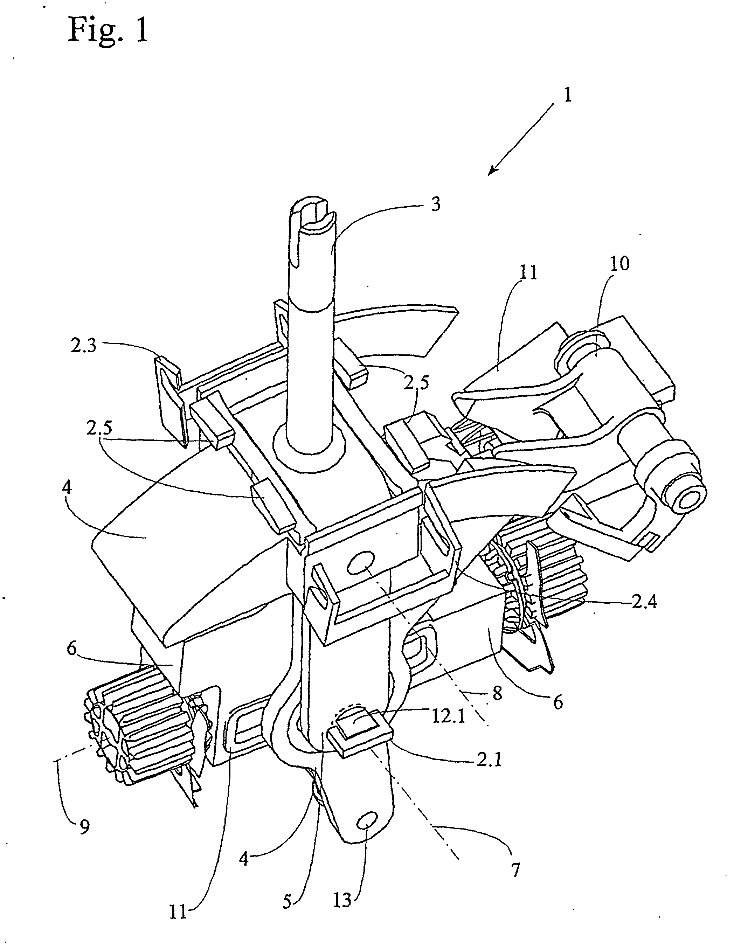

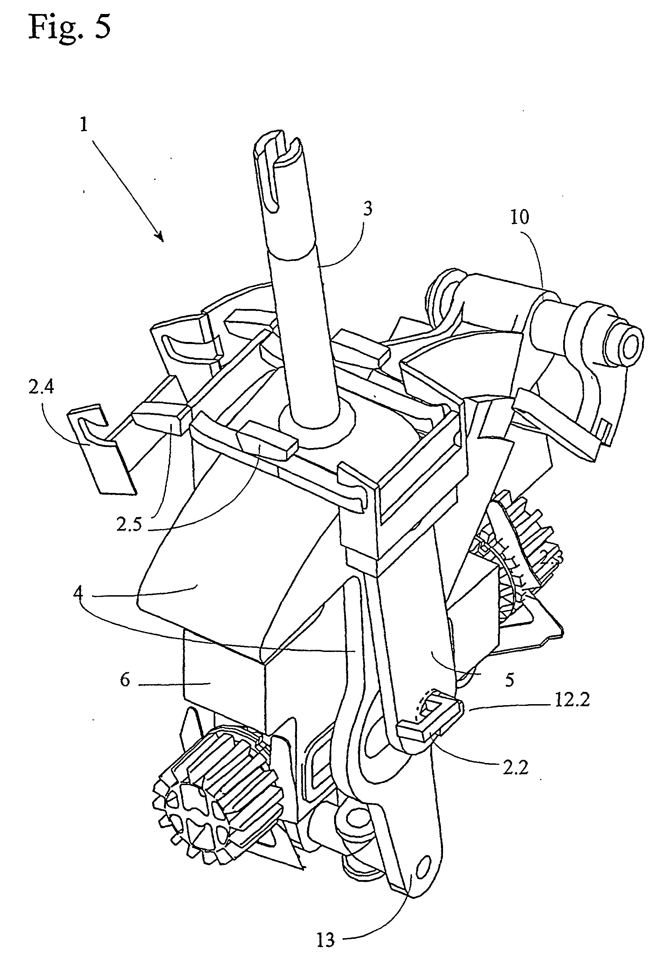

Die Figuren 1 bis 5 zeigen unterschiedliche 3D-Ansichten eines bevorzugten Ausführungsbeispieles der erfindungsgemäßen Schaltvorrichtung mit unterschiedlichen Stellungen des Wählhebels. Der Aufbau dieser Schaltvorrichtung ist mit seinen kinematisch wirksamen Elementen symmetrisch, in bezug auf eine in Fahrzeuglängsrichtung und senkrecht dazu liegende Ebene durch die Schaltvorrichtung, ausgeführt.

Die Schaltvorrichtung 1 besteht im wesentlichen aus einem Zentralträger 6, der um eine, in Fahrzeuglängsrichtung liegende Wählachse 9 in einem - hier nur teilweise dargestellten - Gehäuse 2 gelagert ist. Der Zentralträger 6 weist auf beiden Längsseiten einen Ausschnitt 6.1 für einen Lagereinsatz 11 auf. Der Zentralträger 6 wird von einer u-förmigen, inneren Brücke 4 seitlich umschlossen, die auf beiden Seiten eine runde Achsöffnung 4.1 aufweist, in die der Lagereinsatz 11 mit dem Achselement 11.1 eingreift, so daß die innere Brücke um die vom Lagereinsatz 11 gebildete Achse drehbeweglich ist. Die beidseits am Zentralträger 6 angeordneten Lagereinsätze 11 erzeugen somit eine erste Schaltachse 7, um die sich die innere Brücke 4 verschwenken kann. Zusätzlich besteht eine Schwenkmöglichkeit des Zentralträgers 6 um die senkrecht zur Schaltachse 7 stehende Wählachse 9, innerhalb des Gehäuses 2.

Die innere Brücke 4 wird selbst wiederum von einer äußeren Brücke 5 umschlossen, wobei die innere und die äußere Brücke 4 und 5 im oberen Bereich durch die zweite Schaltachse 8 drehbeweglich um diese Achse miteinander verbunden sind. Weiterhin weist die äußere Brücke 5 beidseits im unteren Bereich je ein Sperrelement 12.1 und 12.2 auf, welche in der Mittelstellung jeweils in, beidseits am Gehäuse 2 angeordnete, Sperrelementeingriffe 2.1 und 2.2 eingreifen, wobei die Sperrelementeingriffe 2.1 und 2.2 ein Teil des - fest mit dem Fahrzeug verbundenen - Gehäuses 2 darstellen. Die Sperrelemente 12.1 und 12.2 und die Sperrelementeingriffe 2.1 und 2.2 sind derart an der äußeren Brücke 5 angebracht, daß sie, wenn sie sich im Eingriff befinden, konzentrisch mit der ersten Schaltachse 7 verlaufen. Befindet sich also der Wählhebel und damit die äußere Brücke 5 im mittleren Bewegungsraum, so wird eine Schwenkbewegung des Wählhebels 3 in Fahrzeuglängsrichtung, über die äußere Brücke 5, über die erste Schaltachse 7 zur inneren Brücke 4 übertragen, welche sich dann ebenfalls um die erste Schaltachse 7 verschwenkt. Findet eine Seitwärtsbewegung des Wählhebels 3 statt, so lösen sich die Sperrelemente 12.1 und 12.2 aus den Sperrelementeingriffen 2.1 und 2.2, so daß eine Schwenkbewegung des Wählhebels 3 in Fahrzeuglängsrichtung nicht mehr als Drehbewegung um die erste Schaltachse auf die innere Brücke 4 übertragen wird, sondern lediglich zu einer Drehbewegung der äußeren Brücke 5 um die zweite, obenliegende Schaltachse 8 führt. Für das Ausrücken der Sperrelemente 12.1 und 12.2 aus den Sperrelementeingriffen 2.1 und 2.2 ist es in diesem Fall unerheblich, ob eine Schwenkbewegung des Wählhebels nach rechts oder nach links stattfindet.

Es entstehen also auf diese Art und Weise drei unterschiedliche Bewegungsräume für den Wählhebel 3 mit unterschiedlichen kinematischen Wirkungen, wobei jeweils zwei benachbarten Bewegungsräume unterschiedlichen Funktionen zuzuordnen sind. Im mittleren Bewegungsraum kann der Wählhebel 3 in Fahrzeugrichtung vor und zurück bewegt werden, wodurch ein Verschwenken der inneren Brücke 4 um die erste Schaltachse 7 erzeugt wird. Wird der Wählhebel 3 seitwärts ausgelenkt, so entsteht auf beiden Seiten eine grundsätzlich neue kinematische Situation, da nun die innere Brücke 4 trotz einer Schwenkbewegung in Fahrzeuglängsrichtung des Wählhebels 3 stillsteht und ausschließlich eine Schwenkbewegung der äußeren Brücke 5 um die zweite, obenliegende Schaltachse 8 stattfindet. Es sind also drei Bewegungsräume entstanden, die zumindest zwei grundsätzlich unterschiedliche Funktionen aufweisen können. Im mittleren Bewegungsraum besteht - wie in diesem Ausführungsbeispiel gezeigt - die Möglichkeit, den unteren Arm der inneren Brücke 4 mit einem Seilzug oder einem Gestänge zu verbinden, welches die Schwenkbewegung im mittleren Bewegungsraum an ein Automatikgetriebe weitergibt. Meist wird durch diese Bewegung die Anwahl der verschiedenen Fahrstufen eines Automatikgetriebes gesteuert werden. Weiterhin kann sowohl der rechte, als auch der linke Bewegungsraum des Wählhebels 3 dazu genutzt werden, die Sequenzschaltung eines Automatikgetriebes zu triggern. Hierfür werden meist elektronische Sensoren verwendet, die beispielsweise ausschließlich auf eine Relativbewegung zwischen der inneren Brücke 4 und der äußeren Brücke 5 reagieren. Es besteht aber auch die Möglichkeit, Sensoren, beispielsweise in der Abdeckung, anzubringen und die Bewegungsinformationen von dort elektronisch weiterzuleiten. Da die Schaltbewegungen des Wählhebels in den seitlichen Bewegungsräumen keine Bewegungen der inneren Brücke 4 hervorrufen, kann auch die Seilzugverbindung zum Getriebe, trotz Schaltbewegungen des Wählhebels im Eingriff bleiben, ohne Schaltvorgänge über den Seilzug auszulösen. Die Bewegungsmöglichkeit der äußeren Brücke 5 wird durch ein Langloch in dem Achselement 11.1 gewährleistet.

Im gezeigten Ausführungsbeispiel sind zusätzlich - für eine verbesserte Führung und für eine Begrenzung der Bewegungsräume des Wählhebels 3 - Führungselemente 2.3 bis 2.5 vorgesehen, die fest mit dem nur teilweise dargestellten Gehäuse 2 verbunden sind. Die Führungselemente 2.3 und 2.4 stellen einen beidseits wirksamen Bewegungsschacht dar, in dem die innere und äußere Brücke 4 und 5 durch ein Seitenverschwenken des Wählhebels 3 eingeführt werden können. Befindet sich der Wählhebel 3 und damit die innere und äußere Brücke 4 und 5 in einer seitlichen Stellung, so verhindern die Führungselemente 2.3 beziehungsweise 2.4 ein Kippen der inneren Brücke 4, während die äußere Brücke 5 um die zweite Schaltachse 8 beweglich bleibt. Zusätzlich wird die Führung des Wählhebels 3 noch durch die Führungselemente 2.5 geführt.

In der Figur 1 befindet sich der Wählhebel 3 in der Mittelstellung im mittleren Bewegungsraum.

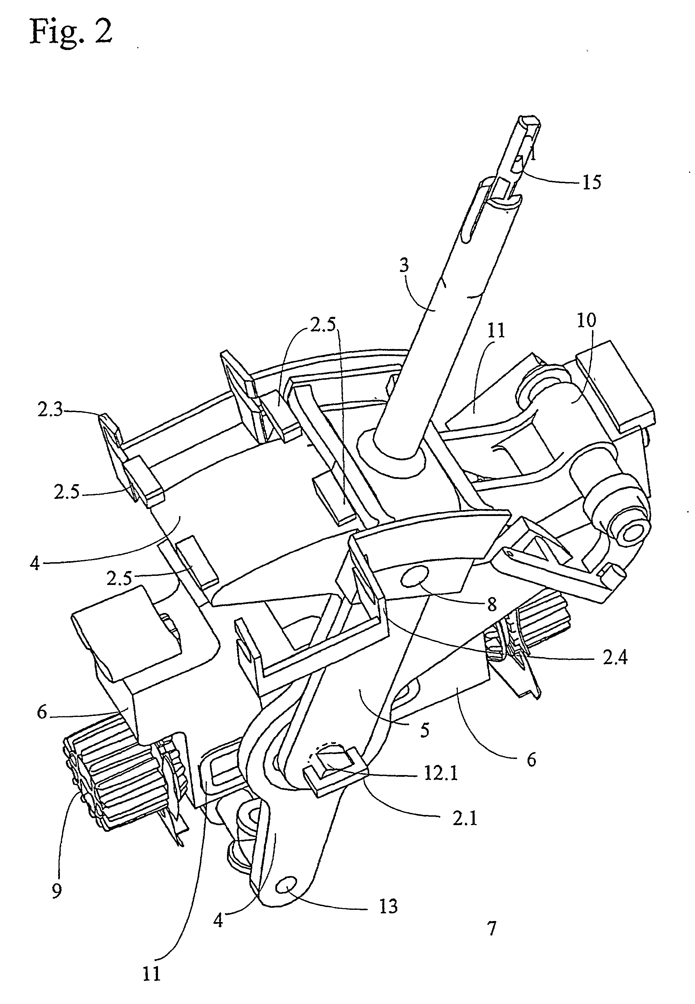

Die Figur 2 zeigt die gleiche Ansicht wie Figur 1, jedoch befindet sich der Wählhebel 3 im mittleren Bewegungsraum, in einer vorderen Stellung. Dies entspricht der "D"-Stellung des Automatikgetriebes.

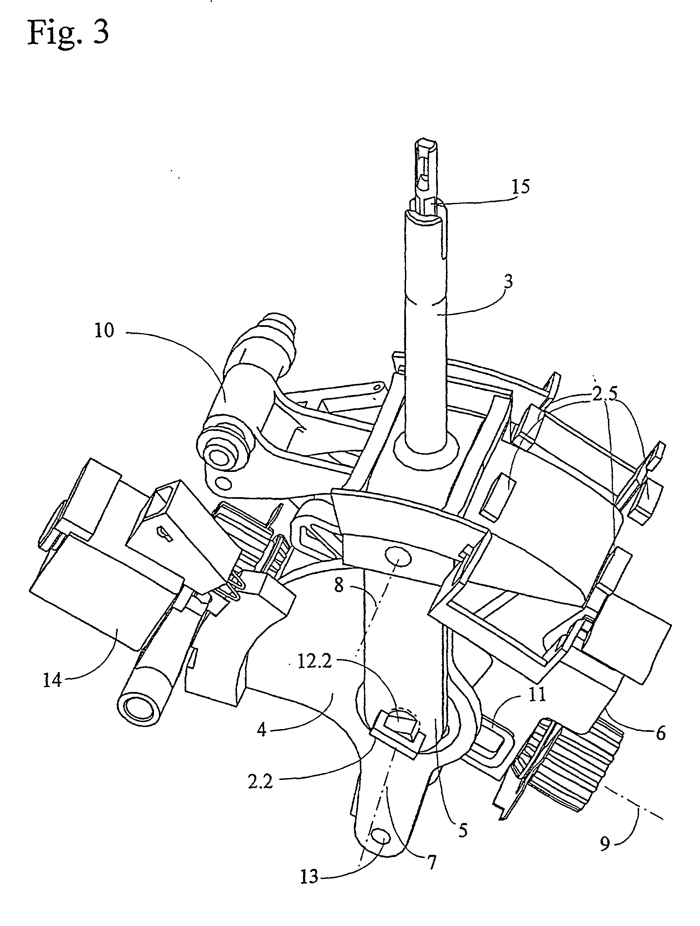

Die Figur 3 zeigt die Schaltvorrichtung 1 mit dem Wählhebel 3 in der gleichen Position wie in Figur 2, jedoch von der gegenüberliegenden Seite.

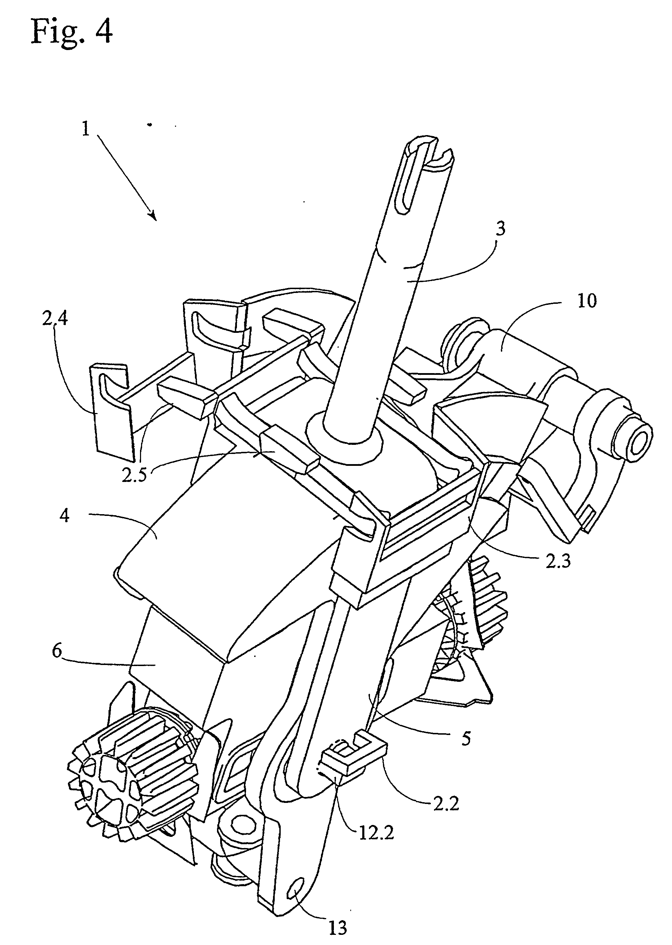

Die Figur 4 zeigt die Schaltvorrichtung 1 mit dem Wählhebel 3 in einem seitlichen Bewegungsraum, das heißt also in diesem Falle in einer Sequenzschaltgasse, wobei der Wählhebel 3 sich bezüglich seiner Schwenkbewegung in Fahrzeugrichtung in Mittelstellung befindet. Deutlich ist zu erkennen, daß das Sperrelement 12.2 aus dem Sperrelementeingriff 2.2 ausgerückt ist, so daß die äußere Brücke 5 um die zweite Schaltachse 8 verschwenkt werden kann und in diesem Beispiel auch relativ zur inneren Brücke 4 verschwenkt ist.

Zusätzlich ist in den Figuren 1 bis 5 auch ein "Key Lock"-System 10 und ein "Shift Lock"-System 14 dargestellt. Beide Systeme sind an sich im Stand der Technik zum Beispiel aus der Patentanmeldung DE 197 56 034 der Anmelderin bekannt und werden daher nicht ausführlich in ihren Funktionen beschrieben.

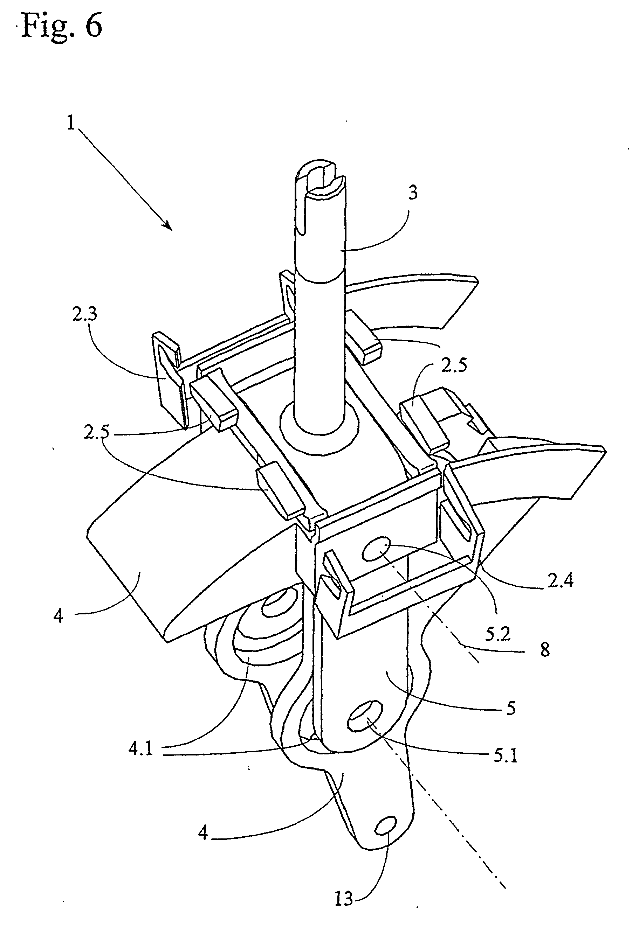

Die Figuren 6 bis 9 zeigen nochmals zur Verdeutlichung unterschiedliche 3D-Ansichten des Zusammenwirkens der inneren Brücke 4, der äußeren Brücke 5 und der Führungsteile 2.3 bis 2.5 des nicht dargestellten Gehäuses 2.

In der Figur 6 ist die innere Brücke 4 mit den beiden Achsöffnungen 4.1 dargestellt, in die im zusammengebauten Zustand das Achselement 11.1 des Lagereinsatzes 11 eingreift. Die äußere Brücke 5 umgreift die innere Brücke 4, wobei die beiden Arme der Brücken im unteren Bereich ebenfalls eine Achsöffnung 5.1 aufweisen, in die die Sperrelemente 12.1 und 12.2 eingesetzt werden können, die dann gegebenenfalls mit den Sperrelementeingriffen 2.1 und 2.2 des Gehäuses 2 zusammenwirken. Der Wählhebel 3 befindet sich in dieser Darstellung im mittleren Bewegungsraumes, der meist der Automatikschaltgasse entspricht.

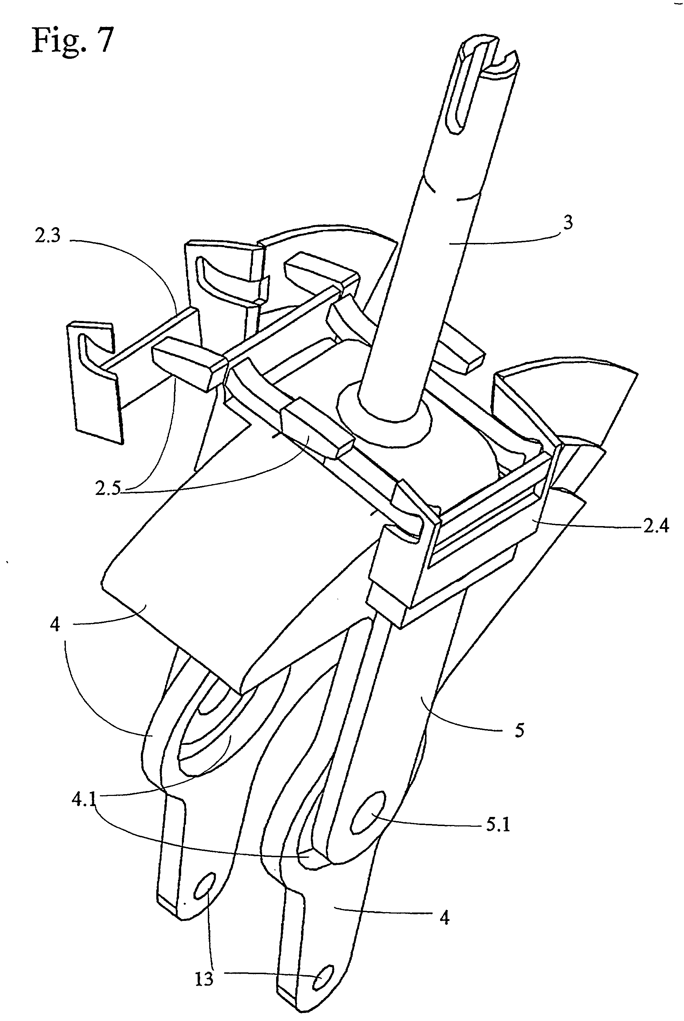

Die Figur 7 zeigt eine ähnliche Ansicht wie Figur 6, jedoch ist hierbei der Wählhebel 3 seitlich verschwenkt und befindet sich bezüglich der Schwenkbewegung um die zweite Schaltachse 8 in einer Mittelstellung.

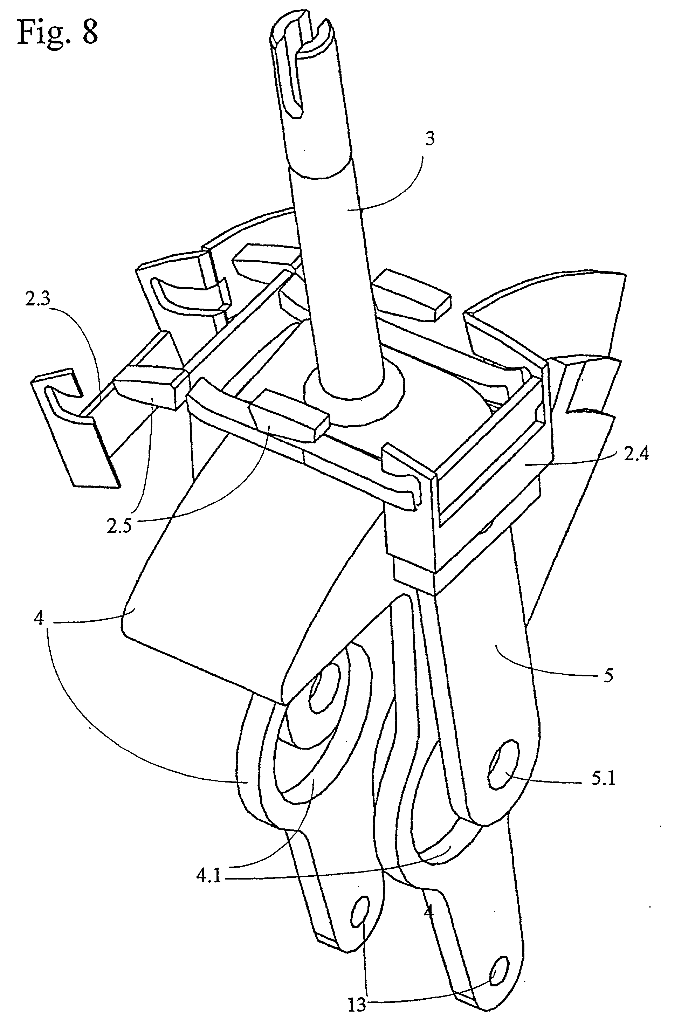

In der Figur 8 ist dargestellt, wie die Wählhebel 3 um die zweite Schaltachse 8 in einer Sequenzschaltgasse gegen die Fahrzeugrichtung ausgelenkt wird. Es ist hierbei deutlich zu erkennen, daß die Achsöffnungen 4.1 und 5.1 sich exzentrisch zueinander positioniert haben.

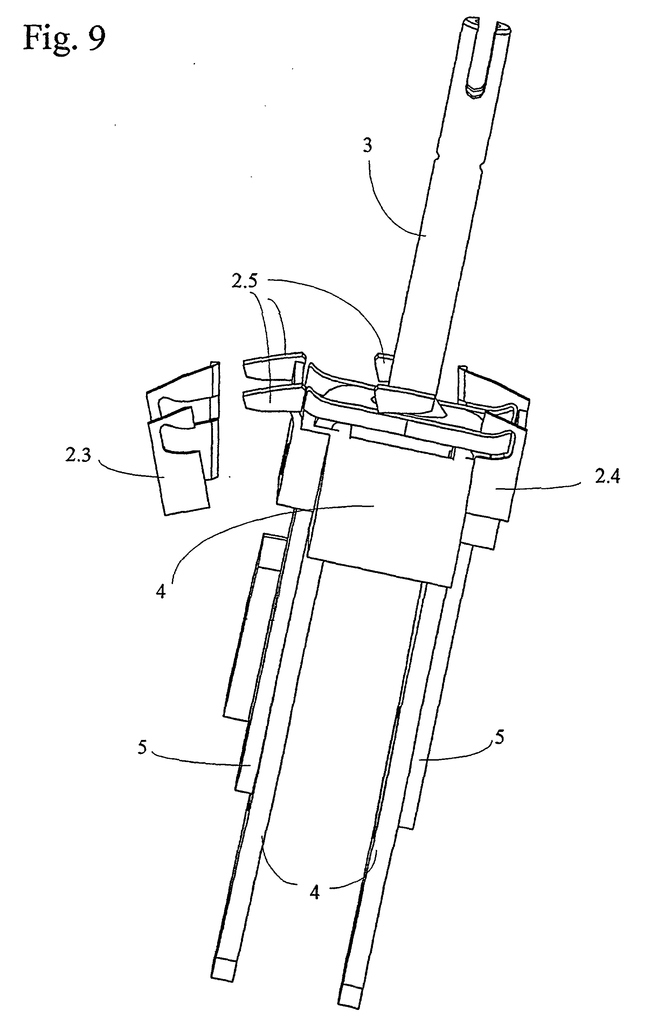

Die Figur 9 zeigt die Situation aus Figur 8 in einer Frontalansicht in Fahrzeuglängsrichtung.

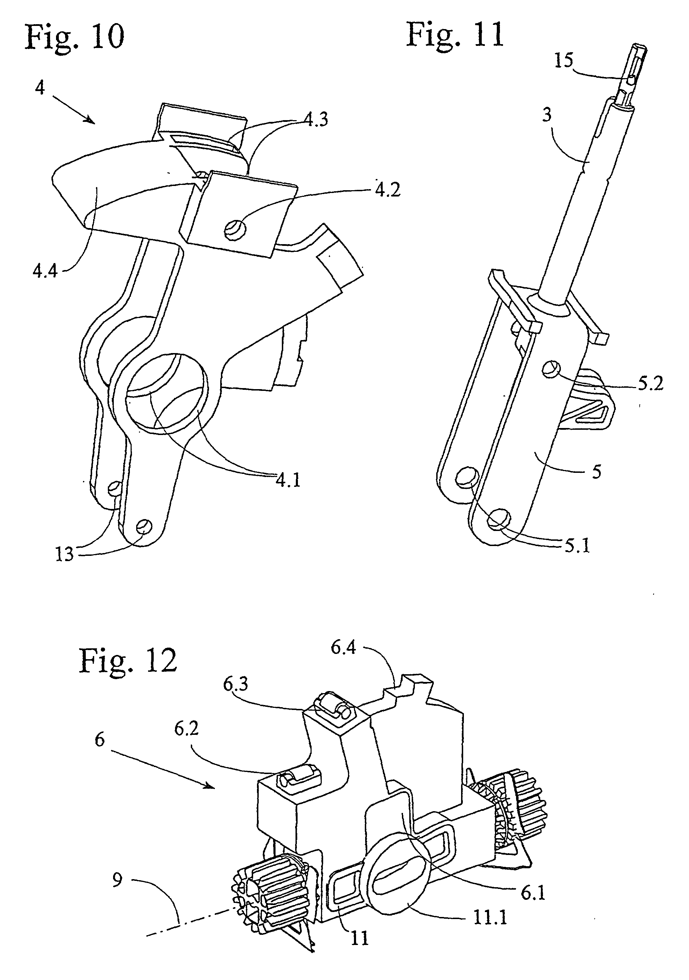

In den Figuren 10 bis 12 ist die Schaltvorrichtung nach Einzelteilen aufgegliedert worden. Figur 10 zeigt die innere Brücke 4 mit der Achsöffnung 4. 1 für die erste Schaltachse 7 und den darunter angeordneten Hebelarm mit der Seilzuganbindung 13. Oberhalb der Achsöffnung 4.1 befindet sich die Achsöffnung 4.2 für die zweite Schaltachse 8 und zwei beidseits angeordnete Schlitze 4.3, durch die die äußere Brücke 5 eingesteckt wird und dann über eingeschobene Bolzen drehbeweglich mit der inneren Brücke 4 verbunden wird. Im oberen Bereich links befindet sich ein Querträger 4.4, der hier nicht sichtbar auf der unteren Seite über eine Rastierung in Fahrzeuglängsrichtung und eine Rastierung in Fahrzeugquerrichtung verfügt.

Die Figur 11 zeigt die äußere Brücke 5, welche am oberen Querträger mit dem Wählhebel 3 verbunden ist. Innerhalb des Wählhebels 3 läuft in an sich bekannter Weise eine Zugstange 15, die mit einem Riegel 16 zusammenwirkt. Die äußere Brücke 5 verfügt im unteren Bereich über eine Achsöffnung 5.1, in die die Sperrelemente 12.1 und 12.2 eingesetzt werden, und im oberen Bereich über eine Achsöffnung 5.2, in die ein Bolzen zur Verbindung zwischen der inneren und der äußeren Brücke eingesetzt wird. Der Bolzen wirkt als zweite Schaltachse 8.

Die Figur 12 zeigt den Zentralträger 6 mit der Wählachse 9 und den seitlich angeordneten Öffnungen 6.1 für den Lagereinsatz 11. Die beidseits angeordneten Lagereinsätze 11 verfügen jeweils über ein Achselement 11.1, welches - meist aus Kunststoff hergestellt - in die Achsöffnung 4.1 der inneren Brücke 4 eingreift. Auf der Oberseite des Zentralträgers 6 befindet sich im vorderen Bereich eine Verriegelungskurvatur 6.4, welche im Zusammenwirken mit der Zugstange 15 und dem Riegel 16 in gewünschter Weise die Bewegung des Wählhebels 3 begrenzen kann. Weiterhin sind auf der Oberseite eine Rastierungsrolle 6.2 und eine Rastierungsrolle 6.3 angeordnet. Die Rastierungsrolle 6.2 dient für die Rastierung einer Seitwärtsbewegung, während die Rastierungsrolle 6.3 für die Rastierung einer Schwenkbewegung der inneren Brücke in Fahrzeugrichtung dient.

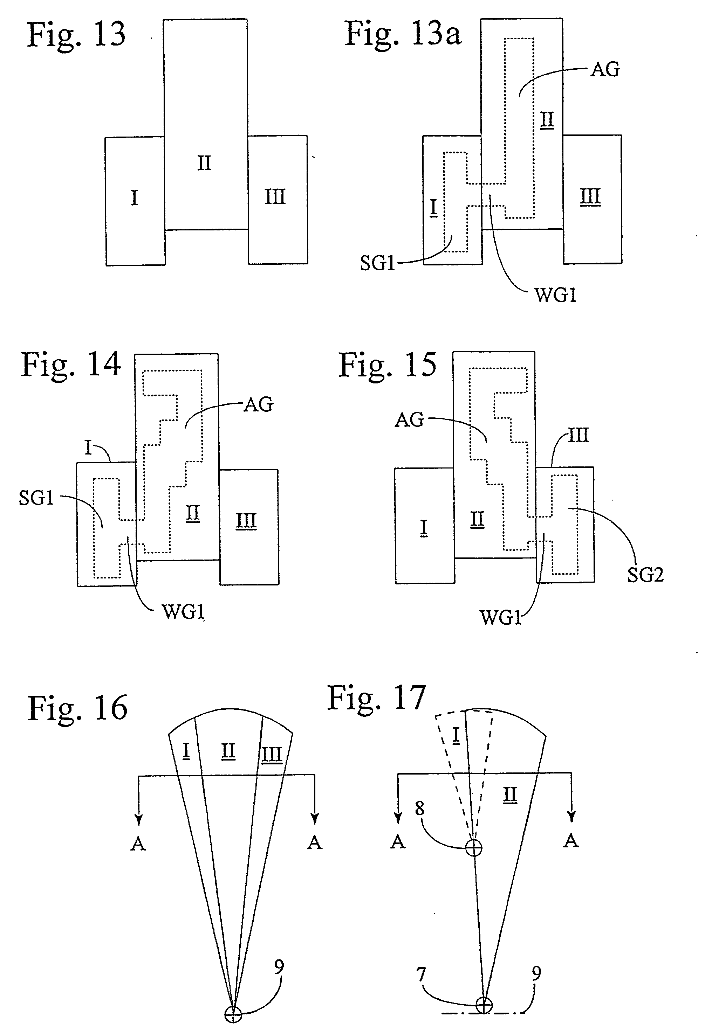

Die Figuren 13 bis 17 zeigen zur Verdeutlichung des Erfindungsgedankens schematische Darstellungen der Bewegungsräume des Wählhebels der erfindungsgemäßen Vorrichtung und gegebenenfalls der darin angeordneten Bewegungsgassen.

Die Figuren 13 bis 15 stellen einen Schnitt A-A aus den Figuren 16 und 17 dar und zeigen die Bewegungsräume des erfindungsgemäßen Beispiels einer Schaltvorrichtung in einer Ebene. In der Figur 13 sind die Bewegungsräume I, II und III dargestellt, die in ihrer Draufsicht aus drei aneinanderliegenden Rechtecken bestehen. Das mittlere Rechteck II entspricht dem Bewegungsraum, der einer Automatikschaltgasse zugeordnet werden kann, während die beidseits angeordneten Bewegungsräume I und III, die in ihrer Längsausrichtung parallel angeordnet sind, die Bewegungsräume darstellen, welche für die Sequenzschaltgasse verwendet oder gegebenenfalls auch für zwei unterschiedliche Funktionen benutzt werden können.

Beispielhaft sind in der Figur 13a zwei Schaltgassen, nämlich die Automatikschaltgasse AG und die Sequenzschaltgasse SG1 dargestellt, wobei beide Schaltgassen miteinander über die Wählgasse WO 1 in Verbindung stehen. Eine derartige Ausgestaltung der Schaltgasse kommt im wesentlichen dann in Betracht, wenn in der Automatikschaltgasse eine Rastierung 6.4, entsprechend dem oben ausführlich beschriebenen Beispiel, vorhanden ist.

Wird die Schaltvorrichtung mit den hier dargestellten Bewegungsräumen bei Fahrzeugen mit unterschiedlicher Lenkradposition (Rechtslenker oder Linkslenker) verwendet, so kann auf einfache Weise - z.B. durch den Austausch der Abdeckung - die Anordnung der Schaltgassen der Positionierung des Fahrersitzes angepaßt werden. Die sonst aufwendige Änderung in der eigentlichen Schaltvorrichtung kann unterbleiben.

Die Figuren 14 und 15 zeigen ein entsprechendes Beispiel einer Schaltvorrichtung mit den gleichen Bewegungsräumen I bis III. Der Unterschied der beiden Ausführungen einer Schaltvorrichtung zwischen Figur 14 und Figur 15 besteht darin, daß eine spiegelbildlich verkehrte Abdeckung mit entsprechend spiegelbildlich angeordneten Bewegungsgassen für den Wählhebel verwendet wird.

In der Figur 16 sind nochmals schematisch in einer Frontansicht die Bewegungsräume I, II und III dargestellt, während die Figur 17 eine Seitenansicht der gleichen Bewegungsräume darstellt, wobei in der Figur 17 die Positionierungen - insbesondere der ersten Schaltachse 7 und der zweiten Schaltachse 8 und auch die Lage der Wählachse 9 - gezeigt sind.

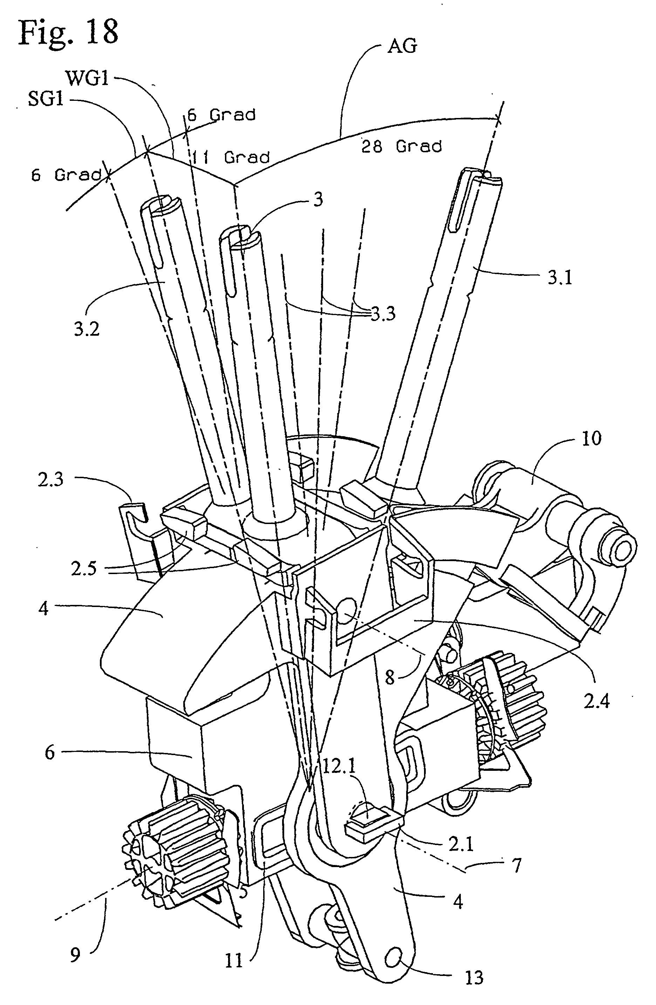

Zur weiteren Verdeutlichung des Erfindungsgedankens ist in der Figur 18 die mögliche Positionierung des Wählhebels einschließlich der Bewegungsgassen dargestellt. Diese Figur 18 zeigt eine Schaltvorrichtung entsprechend der Figur 1 mit gleicher Ansicht. Die dargestellte Positionierung der Brücken 4 und 5 und des Zentralträgers 6 zeigt eine Situation mit dem Wählhebel 3 in einer Mittelstellung in der Automatikschaltgasse. Die beiden zusätzlich daneben dargestellten Wählhebelpositionen 3.1 und 3.2 zeigen unterschiedliche Bewegungssituationen des Wählhebels. Die Wählhebelposition 3.1 entspricht einer Stellung des Wählhebels 3 in der Automatikschaltgasse in der vordersten Position ("P"-Stellung), während der Wählhebel in der Position 3.2 nach links in die Sequenzschaltgasse ausgerückt dargestellt ist. Oberhalb der Wählhebel sind der vom Wählhebel überstreichbare Kreisbogen der Automatikgasse AG mit einer Auslenkungsmöglichkeit um 28 Grad und seitlich davon der Kreisbogen in der Sequenzschaltgasse SG1 mit einer Auslenkung von plus/minus 6 Grad um die zweite Schaltachse 8 angedeutet. Zwischen der Automatikschaltgasse AG und der Sequenzschaltgasse SG1 befindet sich der Kreisbogen der Wählgasse WG1, über die durch Bewegung des Wählhebels um einen Winkel von 11 Grad zwischen der Automatikschaltgasse und der Sequenzschaltgasse gewechselt werden kann.

Zusätzlich ist - gestrichelt dargestellt mit Bezugszeichen 3.3 - die rechte Seite der möglichen Positionierungen des Wählhebels 3 in der rechten Sequenzschaltgasse angedeutet.

Insgesamt wird also mit der erfindungsgemäßen Schaltvorrichtung eine Schaltvorrichtung beschrieben, die für ein Automatikgetriebe mit Sequenzschaltungsmöglichkeit geeignet ist, wobei für einen Wechsel zwischen rechtsund linksgelenkten Fahrzeugen die identische Schaltvorrichtung genutzt werden kann.

## Patentansprüche

1. Schaltvorrichtung eines Kraftfahrzeuggetriebes mit einem Wählhebel (3) und einer Kinematik (4 - 9) zur Übertragung der Wählbewegungen auf das Kraftfahrzeuggetriebe, wobei der Wählhebel (3) in einer Automatikschaltgasse zur Anwahl von Automatikgetriebestufen und in einer Sequenzschaltgasse zum manuellen Auf- und Abwärtsschalten von Getriebestufen bewegt werden kann, **dadurch gekennzeichnet, dass** die Schaltvorrichtung (1) drei nebeneinander liegende, vorzugsweise im wesentlichen parallel zueinander ausgerichtete Bewegungsräume (I, II, III) aufweist, von denen jeweils zwei benachbarte Bewegungsräume (I, II beziehungsweise II, III) für unterschiedliche Funktionen vorgesehen sind, und dass die Automatikschaltgasse und die mindestens eine Sequenzschaltgasse in ihrer Breite und gegebenenfalls Länge durch eine Bewegungskulisse für den Wählhebel (3) gebildet werden und die Bewegungskulisse nur eine einzige Automatikschaltgasse und eine einzige Sequenzschaltgasse aufweist.

2. Schaltvorrichtung nach Anspruch 1,
**dadurch gekennzeichnet, dass** der innen liegende Bewegungsraum (II) für die Automatikschaltgasse und die beiden außen liegenden Bewegungsräume (I, III) für mindestens eine Sequenzschaltgasse vorgesehen sind.

3. Schaltvorrichtung nach Anspruch 1 oder 2,
**dadurch gekennzeichnet, dass** zwischen Automatikschaltgasse und Sequenzschaltgasse eine Verbindungsgasse (Wählgasse) vorhanden ist.

4. Schaltvorrichtung eines automatischen Kraftfahrzeuggetriebes nach einem der vorstehenden Ansprüche, **dadurch gekennzeichnet, dass** für den Wählhebel in der Automatikschaltgasse eine erste Schaltachse (7) und in der Sequenzschaltgasse eine zweite Schaltachse (8) vorgesehen ist, wobei der Wählhebel (3) je nach gewählter Schaltgasse nur um eine der Schaltachsen beweglich ist.

5. Schaltvorrichtung nach dem vorstehenden Anspruch 4,
**dadurch gekennzeichnet, dass** die erste und die zweite Schaltachse (7, 8) exzentrisch zueinander angeordnet sind.

6. Schaltvorrichtung nach einem der vorstehenden Ansprüche 4-5,
**dadurch gekennzeichnet, dass** die erste und die zweite Schaltachse (7, 8) zueinander parallel angeordnet sind.

7. Schaltvorrichtung nach einem der vorstehenden Ansprüche 4-6,
**dadurch gekennzeichnet, dass** die Abstände der ersten und der zweiten Schaltachse (7, 8) zu einem Schaltknauf am Ende des Wählhebels (3) sich wesentlich unterscheiden.

8. Schaltvorrichtung nach einem der vorstehenden Ansprüche,
**dadurch gekennzeichnet, dass** der Wählhebel (3) eine etwa in Fahrzeuglängsrichtung liegende Wählachse (9) aufweist, um die er schwenkbar gelagert ist.

9. Schaltvorrichtung nach einem der vorstehenden Ansprüche,
**dadurch gekennzeichnet, dass** zur Übertragung der Schaltbewegung des Wählhebels (3) zum Kraftfahrzeuggetriebe in zumindest einer Gasse ein Seilzug vorgesehen ist.

10. Schaltvorrichtung nach einem der Ansprüche 1-8,
**dadurch gekennzeichnet, dass** zur Übertragung der Schaltbewegung des Wählhebels (3) zum Kraftfahrzeuggetriebe in zumindest einer Gasse ein Gestänge vorgesehen ist.

11. Schaltvorrichtung nach einem der vorstehenden Ansprüche,
**dadurch gekennzeichnet, dass** für die Übertragung der Schaltbewegung des Wählhebels (3) zum Kraftfahrzeuggetriebe in mindestens einer Schaltgasse, vorzugsweise der Sequenzschaltgasse, eine elektronische Übertragungsvorrichtung vorgesehen ist.

12. Schaltvorrichtung nach einem der vorstehenden Ansprüche,
**dadurch gekennzeichnet, dass** sie über ein "Key Lock"-System (10) verfügt.

13. Schaltvorrichtung nach einem der vorstehenden Ansprüche,
**dadurch gekennzeichnet, dass** sie über ein "Shift Lock"-System (14) verfügt.

14. Schaltvorrichtung nach einem der vorstehenden Ansprüche,
**dadurch gekennzeichnet, dass** die Schaltvorrichtung:
- einen, um eine Wählachse (9) schwenkbaren Zentralträger (6) aufweist,
- eine am Zentralträger (6) schwenkbar gelagerte innere Brücke (4) aufweist, die um eine im wesentlichen senkrecht zur Wählachse (9) stehende erste Schaltachse (7) schwenkbar ist, und
- eine an der inneren Brücke (4), um eine zweite Schaltachse (8) gelagerte und schwenkbare, äußere Brücke (5) aufweist, die mit dem Wählhebel (3) verbunden ist.

15. Schaltvorrichtung gemäß Anspruch 14,
**dadurch gekennzeichnet, dass** mindestens ein Sperrelementeingriff(2.1, 2.2) und mindestens ein Sperrelement (12.1, 12.2) vorgesehen sind, die mit der inneren und äußeren Brücke (4, 5) derart zusammenwirken, dass bei bestimmten Schwenkstellungen des Zentralträgers (6) mindestens ein Sperrelement (12.1, 12.2) und mindestens ein Sperrelementeingriff (2.1, 2.2) sich im gegenseitigen Eingriff befinden, während sie sich in anderen Schwenkstellungen des Zentralträgers (6) außer Eingriff befinden.

16. Schaltvorrichtung gemäß Anspruch 15,
**dadurch gekennzeichnet, dass** die erste Schaltachse (7) durch das mindestens eine Sperrelement (12.1, 12.2) verläuft.

17. Schaltvorrichtung gemäß einem der vorstehenden Ansprüche 15-16,
**dadurch gekennzeichnet, dass** das mindestens eine Sperrelement (12.1, 12.2) und der mindestens eine Sperrelementeingriff (2.1, 2.2) im Falle des gegenseitigen Eingriffs eine drehfeste Verbindung zwischen der inneren Brücke (4) und der äußeren Brücke (5) bilden.

18. Schaltvorrichtung gemäß einem der vorstehenden Ansprüche 15-17,
**dadurch gekennzeichnet, dass** der mindestens eine Sperrelementeingriff (2.1, 2.2) mit dem Gehäuse (2) der Schaltvorrichtung einstückig verbunden ist.

19. Schaltvorrichtung gemäß einem der vorstehenden Ansprüche,
**dadurch gekennzeichnet, dass** Mittel (2.3-2.5) zur Begrenzung von Bewegungsgassen und/oder Bewegungsräumen vorgesehen sind.

20. Schaltvorrichtung gemäß Anspruch 19,
**dadurch gekennzeichnet, dass** die Mittel (2.3-2.5) zur Begrenzung von Bewegungsgassen und/oder Bewegungsräumen zumindest teilweise am Gehäuse (2) befestigt sind.

21. Schaltvorrichtung gemäß einem der vorstehenden Ansprüche 19-20,
**dadurch gekennzeichnet, dass** die Mittel (2.3-2.5) zur Begrenzung von Bewegungsgassen und/oder Bewegungsräumen zumindest teilweise an der inneren Brücke (4) befestigt sind.

22. Schaltvorrichtung gemäß einem der vorstehenden Ansprüche 19-21,
**dadurch gekennzeichnet, dass** die Mittel (2.3-2.5) zur Begrenzung von Bewegungsgassen und/oder Bewegungsräumen zumindest teilweise an der äußeren Brücke (5) befestigt sind.

## Claims

1. Gear shift apparatus of a motor vehicle transmission having a selector lever (3) and a kinematic device (4 - 9) for transferring the selection movements to the motor vehicle transmission, wherein the selector lever (3) may be moved in an automatic shift track to select automatic gears and in a sequential shift track to shift manually up and down gears, **characterized in that** the gear shift apparatus (1) has three travel spaces (I, II, III), which lie side by side and are preferably aligned substantially parallel to one another and of which in each case two adjacent travel spaces (I, II or II, III) are provided for different functions, and that the automatic shift track and the at least one sequential shift track are formed in terms of their width and optionally length by a movement gate for the selector lever (3) and the movement gate comprises only a single automatic shift track and a single sequential shift track.

2. Gear shift apparatus according to claim 1,
**characterized in that** the inner travel space (II) is provided for the automatic shift track and the two outer travel spaces (I, III) are provided for at least one sequential shift track.

3. Gear shift apparatus according to claim 1 or 2,
**characterized in that** between automatic shift track and sequential shift track a connecting track (selection track) is provided.

4. Gear shift apparatus of a motor vehicle automatic transmission according to one of the preceding claims,
**characterized in that** for the selector lever a first shift axis (7) is provided in the automatic shift track and a second shift axis (8) is provided in the sequential shift track, wherein the selector lever (3) depending on the selected shift track is movable only about one of the shift axes.

5. Gear shift apparatus according to the preceding claim 4,
**characterized in that** the first and the second shift axis (7, 8) are disposed eccentrically relative to one another.

6. Gear shift apparatus according to one of the preceding claims 4-5,
**characterized in that** the first and the second shift axis (7, 8) are disposed parallel to one another.

7. Gear shift apparatus according to one of the preceding claims 4-6,
**characterized in that** the distances of the first and of the second shift axis (7, 8) from a gear shift knob on the end of the selector lever (3) differ substantially from one another.

8. Gear shift apparatus according to one of the preceding claims,
**characterized in that** the selector lever (3) has a selection axis (9), which lies approximately in vehicle longitudinal direction and about which it is pivotably mounted.

9. Gear shift apparatus according to one of the preceding claims,
**characterized in that** for transferring the shift movement of the selector lever (3) to the motor vehicle transmission a control cable is provided in at least one track.

10. Gear shift apparatus according to one of claims 1-8,
**characterized in that** for transferring the shift movement of the selector lever (3) to the motor vehicle transmission a linkage is provided in at least one track.

11. Gear shift apparatus according to one of the preceding claims,
**characterized in that** for transferring the shift movement of the selector lever (3) to the motor vehicle transmission an electronic transfer apparatus is provided in at least one shift track, preferably the sequential shift track.

12. Gear shift apparatus according to one of the preceding claims,
**characterized in that** it comprises a "key lock" system (10).

13. Gear shift apparatus according to one of the preceding claims,
**characterized in that** it comprises a "shift lock" system (14).

14. Gear shift apparatus according to one of the preceding claims,
**characterized in that** the gear shift apparatus comprises:
- a central carrier (6) pivotable about a selection axis (9),
- an inner bridge (4), which is mounted pivotally on the central carrier (6) and pivotable about a first shift axis (7) disposed substantially at right angles to the selection axis (9), and
- an outer bridge (5), which is mounted on the inner bridge (4) and pivotable about a second shift axis (8) and is connected to the selector lever (3).

15. Gear shift apparatus according to claim 14,
**characterized in that** at least one locking element engagement (2.1, 2.2) and at least one locking element (12.1, 12.2) are provided, which interact with the inner and outer bridge (4, 5) in such a way that given specific swivel positions of the central carrier (6) at least one locking element (12.1, 12.2) and at least one locking element engagement (2.1, 2.2) are in mutual engagement, while in other swivel positions of the central carrier (6) they are out of mutual engagement.

16. Gear shift apparatus according to claim 15,
**characterized in that** the first shift axis (7) extends through the at least one locking element (12.1, 12.2).

17. Gear shift apparatus according to one of the preceding claims 15-16,
**characterized in that** the at least one locking element (12.1, 12.2) and the at least one locking element engagement (2.1, 2.2) in the situation of mutual engagement form a rotationally fixed connection between the inner bridge (4) and the outer bridge (5).

18. Gear shift apparatus according to one of the preceding claims 15-17,
**characterized in that** the at least one locking element engagement (2.1, 2.2) is integrally connected to the housing (2) of the gear shift apparatus.

19. Gear shift apparatus according to one of the preceding claims,
**characterized in that** means (2.3-2.5) of limiting movement tracks and/or travel spaces are provided.

20. Gear shift apparatus according to claim 19,
**characterized in that** the means (2.3-2.5) of limiting movement tracks and/or travel spaces are fastened at least in part to the housing (2).

21. Gear shift apparatus according to one of the preceding claims 19-20,
**characterized in that** the means (2.3-2.5) of limiting movement tracks and/or travel spaces are fastened at least in part to the inner bridge (4).

22. Gear shift apparatus according to one of the preceding claims 19-21,
**characterized in that** the means (2.3-2.5) of limiting movement tracks and/or travel spaces are fastened at least in part to the outer bridge (5).

## Revendications

1. Dispositif de commutation d'une boîte de vitesses de véhicule automobile comportant un levier de sélection (3) et une cinématique (4-9) pour la transmission des mouvements de sélection à la boîte de vitesses du véhicule automobile, dans lequel le levier de sélection (3) peut être déplacé dans une voie de commutation automatique pour la sélection d'échelons de la boîte de vitesses automatique et dans une voie de commutation séquentielle pour un changement manuel dans le sens montant et dans le sens descendant d'échelons de la boîte de vitesses, **caractérisé en ce que** le dispositif de commutation (1) comporte trois espaces de déplacement (I, II, III) qui sont disposés côte à côte et sont orientés essentiellement parallèlement entre eux et parmi lesquelles deux espaces respectivement voisins de déplacement (I, II ou II, III) pour différentes fonctions sont prévus, et que la voie de commutation automatique et la au moins une voie de commande de commutation séquentielle est formée, en ce qui concerne leur largeur et éventuellement leur longueur, par une coulisse de déplacement pour le levier de sélection (3), et que la coulisse de déplacement ne comporte qu'une seule voie de commutation automatique et qu'une seule voie de commutation séquentielle.

2. Dispositif de commutation selon la revendication 1, **caractérisé en ce que** l'espace de déplacement intérieur (II) est prévu pour la voie de commutation automatique et les deux espaces de déplacement extérieurs (I, III) sont prévus pour au moins une voie de commutation séquentielle.

3. Dispositif de commutation selon la revendication 1 ou 2, **caractérisé en ce qu'**une voie de liaison (voie de sélection) est présente entre la voie de commutation automatique et la voie de commutation séquentielle.

4. Dispositif de commutation d'une boîte de vitesses automatique de véhicule automobile selon l'une des revendications précédentes, **caractérisé en ce que** pour le levier de sélection il est prévu, dans la voie de commutation automatique, un premier axe de commutation (7) et, dans la voie de commutation séquentielle, un second axe de commutation (8), le levier de sélection (3) étant déplaçable uniquement autour de l'un des axes de commutation, en fonction de la voie de commutation sélectionnée.

5. Dispositif de commutation selon la revendication précédente 4, **caractérisé en ce que** les premier et second axes de commutation (7, 8) sont disposés de manière à être excentrés l'un par rapport à l'autre.

6. Dispositif de commutation selon l'une des revendications précédentes 4 à 5, **caractérisé en ce que** les premier et second axes de commutation (7, 8) sont disposés parallèlement entre eux.

7. Dispositif de commutation selon l'une des revendications précédentes 4 à 6, **caractérisé en ce que** les distances des premier et second axes de commutation (7, 8) par rapport à un bouton de commutation à l'extrémité du levier de sélection (3) diffèrent nettement.

8. Dispositif de commutation selon l'une des revendications précédentes, **caractérisé en ce que** le levier de sélection (3) possède un axe de sélection (9) qui est situé approximativement dans la direction longitudinale du véhicule et autour duquel le levier est monté de manière à pouvoir pivoter.

9. Dispositif de commutation selon l'une des revendications précédentes, **caractérisé en ce que** pour la transmission du mouvement de commutation du levier de sélection (3) à la boîte de vitesses du véhicule automobile, un câble de traction est prévu dans au moins une voie.

10. Dispositif de commutation selon l'une des revendications 1 à 8, **caractérisé en ce que** pour la transmission du déplacement de commutation du levier de sélection (3) par rapport à la boîte de vitesses du véhicule automobile il est prévu une tringlerie dans au moins une voie.

11. Dispositif de commutation selon l'une des revendications précédentes, **caractérisé en ce que** pour la transmission du déplacement de commutation du levier de sélection (3) à la boîte de vitesses du véhicule automobile un dispositif de transmission électronique est prévu dans au moins une voie de commutation, de préférence la voie de commutation séquentielle.

12. Dispositif de commutation selon l'une des revendications précédentes, **caractérisé en ce qu'**il dispose d'un système "key lock" (10).

13. Dispositif de commutation selon l'une des revendications précédentes, **caractérisé en ce qu'**il comporte un système "shift lock" (14).

14. Dispositif de commutation selon l'une des revendications précédentes, **caractérisé en ce que** le dispositif de commutation:
- comporte un support central (6) pouvant pivoter autour d'un axe de sélection (9),
- comporte un étrier intérieur (4), qui est monté pivotant sur le support central (6) et peut pivoter autour d'un premier axe de commutation (7) qui est essentiellement perpendiculaire à l'axe de sélection (9), et
- comporte un étrier extérieur (5) monté et pouvant pivoter, sur l'étrier intérieur (4), autour d'un second axe de commutation (8), et qui est relié au levier de sélection (3).

15. Dispositif de commutation selon la revendication 14, **caractérisé en ce qu'**il est prévu au moins un organe (2.1, 2.2) d'engagement d'élément de blocage et au moins un élément de blocage (12.1, 12.2), qui coopèrent avec les étriers intérieurs et extérieurs (4, 5) de telle sorte que, pour certaines positions de pivotement du support central (6), au moins un élément de blocage (12.1, 12.2) et au moins un organe (2.1, 2.2) d'engagement de l'élément de blocage sont réciproquement en prise, tandis que dans d'autres positions de pivotement du support central (6), ils sont hors de prise.

16. Dispositif de commutation selon la revendication 15, **caractérisé en ce que** le premier axe de commutation (7) traverse le au moins un élément de blocage (12.1, 12.2).

17. Dispositif de commutation selon l'une des revendications précédentes 15 et 16, **caractérisé en ce que** le au moins un élément de blocage (12.1, 12.2) et le au moins un organe (2.1, 2.2) d'engagement d'élément de blocage forment, dans le cas d'un engagement réciproque, une liaison solidaire en rotation entre l'étrier intérieur (4) et l'étrier extérieur (5).

18. Dispositif de commutation selon l'une des revendications précédentes 15 à 17, **caractérisé en ce que** le au moins un organe (2.1, 2.2) d'engagement d'élément de blocage est relié d'un seul tenant au boîtier (2) du dispositif de commutation.

19. Dispositif de commutation selon l'une des revendications précédentes, **caractérisé en ce que** des moyens (2.3-2.5) sont prévus pour limiter des voies de déplacement et/ou des espaces de déplacement.

20. Dispositif de commutation selon la revendication 19, **caractérisé en ce que** les moyens (2.3-2.5) servant à limiter des voies de déplacement et/ou des espaces de déplacement sont fixés au moins partiellement au boîtier (2).

21. Dispositif de commutation selon l'une des revendications précédentes 19 ou 20, **caractérisé en ce que** les moyens (2.3-2.5) servant à limiter des voies de déplacement et/ou des espaces de déplacement sont fixés au moins partiellement sur l'étrier intérieur (4).

22. Dispositif de commutation selon l'une des revendications précédentes 19 à 21, **caractérisé en ce que** les moyens (2.3-2.5) pour limiter des voies de déplacement et/ou des espaces de déplacement sont fixés au moins partiellement sur l'étrier extérieur (5).
